(19) Europäisches Patentamt
European Patent Office
Office européen des brevets

(11) **EP 1 745 363 B1**

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(21) Anmeldenummer: **05747771.3**

(22) Anmeldetag: **10.05.2005**

(51) Int Cl.:
**G06F 7/00** (2006.01)

(86) Internationale Anmeldenummer:
**PCT/EP2005/052124**

(87) Internationale Veröffentlichungsnummer:
**WO 2005/111776 (24.11.2005 Gazette 2005/47)**

(54) **VERFAHREN ZUR KOMPENSATION DES STEIGUNGSEINFLUSSES BEI DER BESTIMMUNG EINER REFERENZGESCHWINDIGKEIT**

METHOD FOR COMPENSATING FOR GRADIENT INFLUENCE WHEN DETERMINING A REFERENCE VELOCITY

PROCEDE DE COMPENSATION DE L'INFLUENCE DE LA PENTE LORS DE LA DETERMINATION D'UNE VITESSE DE REFERENCE

(84) Benannte Vertragsstaaten:
**DE FR**

(30) Priorität: **14.05.2004 DE 102004024458**

(43) Veröffentlichungstag der Anmeldung:
**24.01.2007 Patentblatt 2007/04**

(73) Patentinhaber: **Continental Teves & Co. oHG**
**60488 Frankfurt am Main (DE)**

(72) Erfinder:
• **SCHNEIDER, Gerold**
**35085 Ebsdorfergrund (DE)**
• **CASPARI, Roland**
**60489 Frankfurt am Main (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
WO-A-03/068573         DE-A1- 10 104 600
DE-A1- 19 939 979      US-A- 5 752 214
US-B1- 6 701 224

**Beschreibung**

Die Erfindung betrifft ein Verfahren zur Kompensation des Steigungseinflusses bei der Bestimmung einer Referenzgeschwindigkeit, insbesondere bei Allradfahrzeugen, gemäß Anspruch 1 sowie ein Computerprogrammprodukt gemäß Anspruch 7.

Moderne Kraftfahrzeuge sind mit unterschiedlichsten elektronischen Systemen, z. B. Antiblockiersystem (ABS), elektronisches Stabilitätsprogramm (ESP), Antriebsschlupfregelung (ASR, BTCS, TCS) etc, zur Steuerung und Regelung des Fahrverhaltens ausgestattet. Eine wichtige Einflussgröße dieser Systeme ist die Fahrzeugreferenzgeschwindigkeit. Bei Fahrzeugen mit nur einer angetriebenen Achse wird die Fahrzeugreferenzgeschwindigkeit üblicherweise aus dem Raddrehverhalten der nichtangetriebenen Räder bestimmt, da die nichtangetriebenen Räder keinen Radschlupf aufweisen, wodurch die Radgeschwindigkeiten der nichtangetriebenen Räder der Fahrzeuggeschwindigkeit entsprechen. Bei Allradfahrzeugen ist die Bestimmung der Fahrzeugreferenzgeschwindigkeit ungleich schwieriger, da viele Faktoren, u. a. die Steigung der Fahrbahn, einen Einfluss auf die Fahrzeugreferenzgeschwindigkeit ausüben.

Aus der DE 199 11 525 C1 ist ein Verfahren und eine Vorrichtung zum Ermitteln einer Referenzgröße für die Radgeschwindigkeiten eines Fahrzeugs, insbesondere mit Allradantrieb, bekannt. Ferner geht aus der DE 197 32 554 A1 ein Verfahren und eine Vorrichtung zur Bestimmung der Geschwindigkeit eines Fahrzeugs für den Fall, dass alle Räder eines Fahrzeugs durchdrehen, also stärker beschleunigt werden als es der Fahrzeugbeschleunigung selbst entspricht, hervor.

In der gattungsgemäßen WO 03/068573 A2 ist ein Verfahren zur Ermittlung eines Gefälles für Fahrzeuge mit Allradantrieb beschrieben, wobei die Fahrzeuggeschwindigkeit aus der Differenz von Radbeschleunigung und gemessener Längsbeschleunigung ermittelt wird. Es können Fahrsituationen auftreten, in denen es zu einem fehlerhaften Lernen des Gefälles kommen kann. Beispielsweise können die beim Beschleunigen eines Fahrzeugs auf Niedrigreibwert auftretenden Radbeschleunigungen zum falschen Erlernen einer Steigung führen. Bisher wurden daher nur Differenzwerte aus Rad- und Längsbeschleunigung für die Steigungsschätzung verwendet, deren Änderung klein sind. Die Auswertung der Änderung scheitert, wenn auf Niedrigreibwert die Räder einen langsam anwachsenden Radschlupf aufweisen. Hierdurch wird eine Steigung wegen der kleinen Änderung gelernt, obwohl sie hier nicht gelernt werden sollte. Bei einer sich stark und schnell ändernden Steigung einer Fahrbahn wird aufgrund der großen Änderung keine Steigung gelernt, obwohl sie hier gelernt werden sollte.

Die Aufgabe der vorliegenden Erfindung besteht darin, ein Verfahren zur Kompensation des Steigungseinflusses bei der Bestimmung einer Referenzgeschwindigkeit bereitzustellen, welches die bekannten Nachteile eliminiert.

Diese Aufgabe wird durch das erfindungsgemäße Verfahren gemäß Anspruch 1 gelöst.

Weitere Merkmale der Erfindung ergeben sich aus den Unteransprüchen. Die Erfindung wird anhand der einzigen Figur beschrieben.

Es hat sich in Versuchen herausgestellt, dass sich die Radmuster bei den oben beschriebenen Problemmanövern (langsam anwachsender Radschlupf; stark und schnell ändernde Steigung der Fahrbahn) ähneln. In beiden Fällen ist die Radgeschwindigkeit und damit auch die Radbeschleunigung größer als die gemessene Fahrzeugbeschleunigung bzw. die für das anliegende Motormoment erwartete Fahrzeugbeschleunigung. Bei einer Bergabfahrt beispielsweise resultiert die zusätzliche Radbeschleunigung aus der Hangabtriebskraft. Auf Niedrigreibwert wird das Rad aufgrund eines Überschussrnomentes beschleunigt, das nicht in zusätzliche Fahrzeugbeschleunigung umgesetzt werden konnte (durchdrehendes Rad). Um zu erkennen, ob ein langsam anwachsender Radschlupf oder eine sich stark und schnell ändernde Fahrbahnsteigung vorliegt, müssen die Radmuster voneinander getrennt werden. Dies wird erfindungsgemäß dadurch erreicht, dass die geschätzte Fahrbahnsteigung auf das Motormoment zurückgeführt wird.

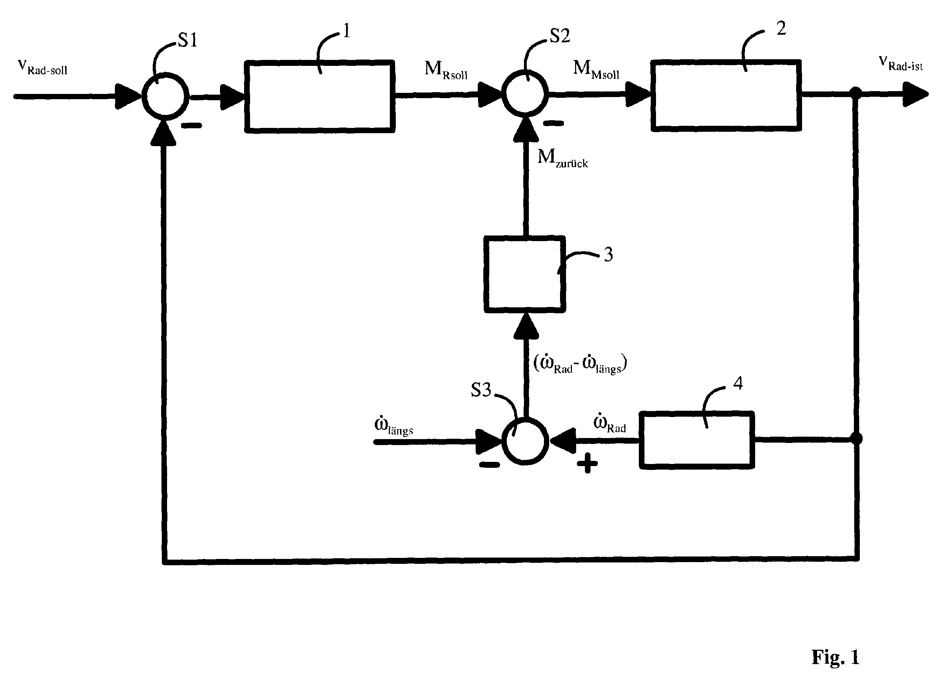

In Fig. 1 ist ein Regelkreis abgebildet, in welchem die Fahrbahnsteigung auf das Motormoment zurückgeführt wird. Herkömmlicherweise wird einem Fahrzeugregler 1, beispielsweise einem Regler für eine Antriebsschlupfregelung (ASR), als Eingangsgröße eine Radsollgeschwindigkeit $v_{Rad-soll}$, welche in einer ersten Summationsstelle S1 mit der Radistgeschwindigkeit $v_{Rad-ist}$ verknüpft wird, zugeführt. Diese Radsollgeschwindigkeit $v_{Rad-soll}$ ist beispielsweise abhängig von einem vorgegebenen Radschlupfwert. Der Fahrzeugregler 1 gibt abhängig von der Eingangsgröße ein Reglersollmoment $M_{Rsoll}$ einer Fahrzeugregelstrecke 2 als Eingangsgröße vor, aus der sich als Ausgangsgröße die Radistgeschwindigkeit $v_{Rad-ist}$ ergibt. Erfindungsgemäß wird die geschätzten Fahrbahnsteigung auf das Motormoment zurückgeführt. Dies wird dadurch erreicht, dass aus der Radistgeschwindigkeit $v_{Rad-ist}$ in einem Block 4 mittels einer mathematischen Operation die Radbeschleunigung $\dot{\omega}_{Rad}$ bestimmt wird, welche in einer dritten Summationsstelle S3 mit der Längsbeschleunigung des Fahrzeugs $\dot{\omega}_{längs}$ verknüpft wird. Die Längsbeschleunigung $\dot{\omega}_{längs}$ kann hierbei beispielsweise mittels vorhandener Sensoren gemessen werden. Durch die Verknüpfung der Längsbeschleunigung $\dot{\omega}_{längs}$ mit der Radbeschleunigung $\dot{\omega}_{Rad}$ ergibt sich die geschätzte Fahrbahnsteigung ($\dot{\omega}_{Rad}$ - $\dot{\omega}_{längs}$), welche in einem Verstärkungsblock 3 mit einem Verstärkungsfaktor K verknüpft wird, woraus sich ein zurückgeführtes Moment $M_{zurücx}$ ergibt. Aus diesem zurückgeführten Moment $M_{zurück}$ und dem Reglersollmoment $M_{Rsoll}$ wird in einer zweiten Summationsstelle S2 ein Motorsollmoment $M_{Msoll}$ bestimmt, welches der Fahrzeugregelstrecke 2 als Eingangsgröße zur Bestimmung der Radistgeschwindigkeit $v_{Rad-ist}$ übergeben wird.

Der Verstärkungsfaktor K in der Rückführung wird so ausgelegt, dass das zurückgeführte Moment M$_{zurück}$ die Räder auf Niedrigreibwert sicher zur Umkehr zwingen (Bedingung 1), ohne dass dies bei Steigungsänderungen einer Fahrbahn spürbar ist (Bedingung 2). Unter dem Begriff "Umkehr" soll verstanden werden, dass der Schlupf an den Rädern kleiner wird, wodurch das Durchdrehen des Rades vermindert bzw. eliminiert wird. Um dies zu erreichen, wird das nicht absetzbare Überschussmoment durch die Rückführung kompensiert. Als Wert des Verstärkungsfaktors K wird die aktuell anliegende Trägheitsmasse des Antriebsstrangs verwendet.

Im Folgenden sei zur Erläuterung ein Manöver angenommen, bei dem ein Fahrzeug mit anwachsendem Radschlupf aus einer Ebene in eine Gefällstrecke fährt. Bedingung 1 ist erfüllt, wenn das Überschussmoment ΔM, mit dem die Räder abreißen,

$$\Delta M = J * (\dot{\omega}_{Rad} - \dot{\omega}_{längs} - \dot{\omega}_{HA}),$$

komplett kompensiert wird. Dabei ist J die Trägheitsmasse, $\dot{\omega}_{Rad}$ die Radbeschleunigung, $\dot{\omega}_{längs}$ die Längsbeschleunigung, $\dot{\omega}_{HA}$ die wahre Steigung und ($\dot{\omega}_{Rad} - \dot{\omega}_{längs}$) die geschätzte Steigung. Bei einem Verstärkungsfaktor K von

$$K = -J$$

wird dieses Überschussmoment ΔM um -J * $\dot{\omega}_{HA}$ überkompensiert, so dass $\dot{\omega}_{Rad}$ gegen ($\dot{\omega}_{längs} + \dot{\omega}_{HA}$) und ($\dot{\omega}_{Rad} - \dot{\omega}_{längs}$) gegen $\dot{\omega}_{HA}$ konvergiert. Die geschätzte Steigung ($\dot{\omega}_{Rad} - \dot{\omega}_{längs}$) konvergiert zwar gegen die wahre Steigung $\dot{\omega}_{HA}$, dies geschieht aber auf Kosten einer geringeren Längsbeschleunigung $\dot{\omega}_{längs}$ als dies ohne die Rückführung möglich gewesen wäre. Die Längsbeschleunigung $\dot{\omega}_{längs}$ fällt dabei um $\Delta\dot{\omega}_{längs}$ ab. Diese Abnahme kann unter Verwendung der Fahrzeugmasse m und des effektiven Reifenradius r$_{eff}$ wie folgt abgeschätzt werden:

$$\Delta\dot{\omega}_{längs} = \Delta M/[J+m*r_{eff}^2] = -J/[J+m*r_{eff}^2] * \dot{\omega}_{HA}.$$

Der auch als Massenzuschlagsfaktor bekannte Faktor $J/[J+m*r_{eff}^2]$ liegt je nach Gangstufe in einem Bereich von etwa 0,1 bis 0,4. Die Änderung der Längsbeschleunigung $\Delta\dot{\omega}_{längs}$ fällt damit um etwa 10% bis etwa 40% geringer aus als die wahre Steigung $\dot{\omega}_{HA}$. Es besteht aber nach wie vor ein Zuwachs an Fahrzeugbeschleunigung infolge der Steigungsänderung. Ist dieser Zuwachs noch groß genug, dürfte der Verlust an Beschleunigung für den Fahrer nicht spürbar sein. Damit ist auch Bedingung 2 erfüllt.

Oft genügt es einfach zu erkennen, ob die Räder einen anwachsenden Radschlupf aufweisen oder ob die plötzliche Radbeschleunigung Folge einer Steigungsänderung der Fahrbahn ist. Auch dies kann aus der erfindungsgemäßen Rückführung erkannt werden. Die Rückführung bewirkt ein Abfallen der geschätzten Steigung ($\dot{\omega}_{Rad} - \dot{\omega}_{längs}$) bei Rädern mit anwachsendem Radschlupf. Bei einem Übergang in eine Gefällstrecke ohne Räder mit anwachsendem Radschlupf ist die Rückführung ohne Einfluss auf die geschätzte Steigung ($\dot{\omega}_{Rad} - \dot{\omega}_{längs}$). Die Änderung der Steigung bei aktiver Rückführung ist daher ein Merkmal für die Fahrsituation: abreißende Räder oder Steigungsänderung.

Das obige Beispiel zeigt, dass durch die Rückführung die geschätzte Steigung ($\dot{\omega}_{Rad} - \dot{\omega}_{längs}$) gegen die wahre Steigung $\dot{\omega}_{HA}$ konvergiert, wobei das Fahrzeug zwar als Folge der Rückführung einen Teil der möglichen Beschleunigung verliert, der Zuwachs an Beschleunigung aber trotzdem positiv ist. Der prozentuale Verlust an möglicher Fahrzeugbeschleunigung dürfte je nach Gangstufe für den Fahrer kaum auflösbar sein. Daneben ermöglicht die aktive Rückführung die Änderung der Steigung als Merkmal für die Fahrsituation zu nutzen: abreißende Räder oder Steigungsänderung.

**Patentansprüche**

1. Verfahren zur Kompensation des Steigungseinflusses bei der Bestimmung einer Referenzgeschwindigkeit, insbesondere bei Allradfahrzeugen, **gekennzeichnet durch** die Schritte:

- Bestimmen eines Reglersollmoments (M$_{Rsoll}$) in einem Fahrzeugregler (1) aus mindestens einer Radistgeschwindigkeit (v$_{Rad-ist}$) und einer vorgegebenen Radsollgeschwindigkeit (v$_{Rad-soll}$),

- Bestimmen eines zurückgeführten Moments ($M_{zurück}$), welches proportional zu einer geschätzten Fahrbahnsteigung ($\dot{\omega}_{Rad}$ - $\dot{\omega}_{längs}$) ist,
- Berechnen eines Motorsollmoments ($M_{Msoll}$) aus dem Reglersollmoment ($M_{Rsoll}$) und dem zurückgeführten Moment ($M_{zurück}$), und
- Übergeben des Motorsollmoments ($M_{Msoll}$) an einer Fahrzeugregelstrecke (2) zur Bestimmen der Radistgeschwindigkeit ($v_{Rad-ist}$) aus dem Motorsollmoment ($M_{Msoll}$).

2. Verfahren nach Anspruch 1, **dadurch gekennzeichnet, dass** das zurückgeführte Moment ($M_{zurück}$) der aus der geschätzten Fahrbahnsteigung ($\dot{\omega}_{Rad}$ - $\dot{\omega}_{längs}$) und einem Verstärkungsfaktor K bestimmt wird.

3. Verfahren nach Anspruch 2, **dadurch gekennzeichnet, dass** die geschätzte Fahrbahnsteigung ($\dot{\omega}_{Rad}$ - $\dot{\omega}_{längs}$) aus einer Radbeschleunigung ($\dot{\omega}_{Rad}$) und einer Fahrzeuglängsbeschleunigung ($\dot{\omega}_{längs}$) bestimmt wird.

4. Verfahren nach Anspruch 3, **dadurch gekennzeichnet, dass** die Radbeschleunigung ($\dot{\omega}_{Rad}$) aus der Radgeschwindigkeit ($v_{Rad}$) mittels einer mathematischen Operation bestimmt wird.

5. Verfahren nach Anspruch 3, **dadurch gekennzeichnet, dass** die Längsbeschleunigung ($\dot{\omega}_{längs}$) mittels Sensoren gemessen wird.

6. Verfahren nach Anspruch 2, **dadurch gekennzeichnet, dass** als Wert des Verstärkungsfaktors K die aktuell anliegende Trägheitsmasse des Antriebsstrangs des Fahrzeugs verwendet wird.

**Claims**

1. Method for compensating for the gradient influence when determining a reference velocity, in particular in the case of all-wheel vehicles, **characterized by** the steps of:

   - determining a desired controller torque ($M_{Rsoll}$) in a vehicle controller (1) from at least one actual wheel speed ($V_{Rad-ist}$) and a prescribed desired wheel speed ($V_{Rad-soll}$),
   - determining a reduced torque ($M_{zurück}$) which is proportional to an estimated gradient of the underlying surface ($\omega_{Rad}$ - $\omega_{längs}$).
   - calculating a desired engine torque ($M_{Msoll}$) from the desired controller torque ($M_{Rsoll}$) and the reduced torque ($M_{zurück}$),
   - transmitting the desired engine torque ($M_{Msoll}$) in a vehicle controlled system (2) in order to determine the actual wheel speed ($v_{Rad-ist}$) from the desired engine torque ($M_{Msoll}$).

2. Method according to Claim 1, **characterized in that** the reduced torque ($M_{zurück}$) is determined from the estimated gradient of the underlying surface ($\omega_{Rad}$ - $\omega_{längs}$) and an amplification factor K.

3. Method according to Claim 2, **characterized in that** the estimated gradient of the underlying surface ($\omega_{Rad}$ - $\omega_{längs}$) is determined from a wheel acceleration ($\omega_{Rad}$) and a vehicle longitudinal acceleration ($\omega_{längs}$).

4. Method according to Claim 3, **characterized in that** the wheel acceleration ($\omega_{Rad}$) is determined from the wheel speed ($V_{Rad}$) by means of a mathematical operation.

5. Method according to Claim 3, **characterized in that** the longitudinal acceleration ($\omega_{längs}$) is measured by means of sensors.

6. Method according to Claim 2, **characterized in that** the currently present inertial mass of the drive train of the vehicle is used as the value of the amplification factor K.

**Revendications**

1. Procédé de compensation de l'influence de la pente lors de la détermination d'une vitesse de référence, notamment pour des véhicules toutes roues motrices, **caractérisé par** les étapes suivantes :

- détermination d'un moment théorique du régulateur ($M_{Rsoll}$) dans un régulateur de véhicule (1) à partir d'au moins une vitesse réelle de roue ($V_{rad-ist}$) et d'une vitesse théorique de roue ($V_{rad-soll}$) prévue ;
- détermination d'un moment imputé ($M_{zurück}$) qui est proportionnel à une pente de route ($\dot\omega_{Rad} - \dot\omega_{längs}$) estimée ;
- calcul d'un moment de roulis du moteur ($M_{Msoll}$) à partir du moment théorique du régulateur ($M_{Rsoll}$) et du moment imputé ($M_{zurück}$) ; et
- transmission du moment de roulis du moteur ($M_{Msoll}$) à une course de réglage du véhicule (2) pour déterminer la vitesse réelle de la roue ($V_{rad-ist}$) à partir du moment de roulis du moteur ($M_{Msoll}$).

2. Procédé selon la revendication 1, **caractérisé en ce que** le moment imputé ($M_{zurück}$) est déterminé à partir de la pente de route ($\dot\omega_{Rad} - \dot\omega_{längs}$) estimée et d'un facteur d'amplification K.

3. Procédé selon la revendication 2**, caractérisé en ce que** la pente de route ($\dot\omega_{Rad} - \dot\omega_{längs}$) estimée est déterminée à partir d'une accélération de roue ($\dot\omega_{Rad}$) et d'une accélération longitudinale du véhicule ($\dot\omega_{längs}$).

4. Procédé selon la revendication 3, **caractérisé en ce que** l'accélération de roue ($\dot\omega_{Rad}$) est déterminée à partir de la vitesse de roue ($v_{Rad}$) par le biais d'une opération mathématique.

5. Procédé selon la revendication 3, **caractérisé en ce que** l'accélération longitudinale ($\dot\omega_{längs}$) est mesurée à l'aide de capteurs.

6. Procédé selon la revendication 2, **caractérisé en ce que** la masse d'inertie actuelle de la chaîne de transmission du véhicule est utilisée comme valeur pour le facteur d'amplification K.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19911525 C1
- DE 19732554 A1

- WO 03068573 A2